(19) Europäisches Patentamt
European Patent Office
Office européen des brevets

(11) **EP 4 407 513 A1**

(12) **EUROPEAN PATENT APPLICATION**

(43) Date of publication:
**31.07.2024 Bulletin 2024/31**

(21) Application number: **24153173.0**

(22) Date of filing: **22.01.2024**

(51) International Patent Classification (IPC):
**G06N 3/008** (2023.01)     **B25J 11/00** (2006.01)

(52) Cooperative Patent Classification (CPC):
**B25J 11/001; G06N 3/008**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **25.01.2023 JP 2023009337**

(71) Applicant: **Casio Computer Co., Ltd.**
**Tokyo 151-8543 (JP)**

(72) Inventors:
• **Hasegawa, Hirokazu**
**Hamura-shi, Tokyo, 205-8555 (JP)**
• **Ichikawa, Erina**
**Hamura-shi, Tokyo, 205-8555 (JP)**
• **Onoda, Kayoko**
**Hamura-shi, Tokyo, 205-8555 (JP)**

(74) Representative: **Grünecker Patent- und Rechtsanwälte**
**PartG mbB**
**Leopoldstraße 4**
**80802 München (DE)**

(54) **ROBOT, ROBOT CONTROL METHOD, AND PROGRAM**

(57)     A robot (200) includes external stimulus acquisition means (111) for acquiring an external stimulus, parameter updating means (113) for updating, in accordance with a type of the external stimulus acquired by the external stimulus acquisition means (111), an emotion parameter expressed by a position on a positioning map (300) having at least two coordinate axes and expressing a pseudo-emotion, action control means (112) for executing action control corresponding to the emotion parameter updated by the parameter updating means (113), and a memory storing a first table in which an evaluation value is associated with each type of the external stimulus and a second table in which a correction value is associated with each position on the positioning map (300). In a case of updating the emotion parameter, the parameter updating means (113) acquires, from the first table, the evaluation value corresponding to the type of the external stimulus acquired by the external stimulus acquisition means (111) and acquires, from the second table, the correction value corresponding a current position of the emotion parameter on the positioning map (300), and moves, based on the acquired evaluation value and the acquired correction value, a position of the emotion parameter on the positioning map (300).

FIG. 19

ROBOT CONTROL PROCESSING
S1 INITIALIZATION PROCESSING
S2 ACQUIRE EXTERNAL STIMULUS ?
YES / NO
S3 ACTION CORRESPONDING TO EXTERNAL STIMULUS
S4 MOVEMENT VECTOR CALCULATION PROCESSING
S5 MOVE EMOTION PARAMETER
S6 ACTION CORRESPONDING TO EMOTION PARAMETER
S7 UPDATE HISTORY BUFFER
S8 INTERRUPT PROCESSING
S9 SPONTANEOUS ACTION
S10 MOVE EMOTION PARAMETER GRADUALLY TOWARD ORIGIN

EP 4 407 513 A1

**Description**

The present disclosure relates generally to a robot, a robot control method, and a program.

In the related art, robots are known that simulate living organisms such as pets. For example, Unexamined Japanese Patent Application Publication No. 2003-117866 describes a robot device that determines an internal emotion on the basis of past operation history, conversation history, likeability, intimacy, and the like, and operates in accordance with the internal emotion.

In a robot that expresses a pseudo-emotion of a living organism such as that described above, there is a need to simulate natural changes of the emotion of living organism in order to more realistically simulate the living organism.

The present disclosure is made with the view of the above situation, and an objective of the present disclosure is to provide a robot, that is a device, capable of simulating natural changes of the emotions of a living organism, a robot control method, and a program.

A robot according to one embodiment of the present disclosure includes:

external stimulus acquisition means for acquiring an external stimulus;
parameter updating means for updating, in accordance with a type of the external stimulus acquired by the external stimulus acquisition means, an emotion parameter expressed by a position on a positioning map having at least two coordinate axes and expressing a pseudo-emotion; and
action control means for executing action control corresponding to the emotion parameter updated by the parameter updating means,
characterized in that
the robot includes a memory storing a first table in which an evaluation value is associated with each type of the external stimulus and a second table in which a correction value is associated with each position on the positioning map, and
in a case of updating the emotion parameter, the parameter updating means acquires, from the first table, the evaluation value corresponding to the type of the external stimulus acquired by the external stimulus acquisition means and acquires, from the second table, the correction value corresponding a current position of the emotion parameter on the positioning map, and moves, based on the acquired evaluation value and the acquired correction value, a position of the emotion parameter on the positioning map.

A robot control method according to one embodiment of the present disclosure includes:

an external stimulus acquisition step of acquiring an external stimulus;
a parameter updating step of updating an emotion parameter in accordance with a type of the external stimulus acquired in the external stimulus acquisition step, the emotion parameter being expressed by a position on a positioning map having at least two coordinate axes; and
an action control step of executing action control corresponding to the emotion parameter updated in the parameter updating step,
characterized in that
a first table in which an evaluation value is associated with each type of the external stimulus and a second table in which a correction value is associated with each position on the positioning map are stored in a memory, and
the parameter updating step includes, in a case of updating the emotion parameter, acquiring, from the first table, the evaluation value corresponding to the type of the external stimulus acquired in the external stimulus acquisition step and acquiring, from the second table, the correction value corresponding to a current position of the emotion parameter on the positioning map, and moving, based on the acquired evaluation value and the acquired correction value, a position of the emotion parameter on the positioning map.

A program according to one embodiment of the present disclosure causes a computer of a robot that acts in accordance with an emotion parameter expressing a pseudo-emotion to function as:

external stimulus acquisition means for acquiring an external stimulus;
parameter updating means for updating the emotion parameter in accordance with a type of the external stimulus acquired by the external stimulus acquisition means, the emotion parameter being expressed by a position on a positioning map having at least two coordinate axes; and
action control means for executing action control corresponding to the emotion parameter updated by the parameter updating means;
characterized in that
a first table in which an evaluation value is associated with each type of the external stimulus and a second table in which a correction value is associated with each position on the positioning map are stored in a memory, and in a case of updating means updates the emotion parameter, the parameter updating means acquire, from the first table, the evaluation value corresponding to the type of the external stimulus acquired by the external stimulus acquisition means and acquires, from the second table, the correction value corresponding a current position of the emotion parameter on the positioning map, and move, based on the acquired evaluation value and the acquired correction value, a position of the emotion parameter on the positioning map.

According to the present disclosure, it is possible to provide a robot, that is a device, capable of simulating natural changes of the emotions of a living organism, a robot control method, and a program.

A more complete understanding of this application can be obtained when the following detailed description is considered in conjunction with the following drawings, in which:

FIG. 1 is a drawing illustrating the appearance of a robot according to an embodiment;
FIG. 2 is a cross-sectional of the robot according to the embodiment, viewed from a side surface;
FIG. 3 is a drawing illustrating a housing of the robot according to the embodiment;
FIG. 4 is a first drawing illustrating movement of a twist motor of the robot according to the embodiment;
FIG. 5 is a second drawing illustrating movement of the twist motor of the robot according to the embodiment;
FIG. 6 is a first drawing illustrating movement of a vertical motor of the robot according to the embodiment;
FIG. 7 is a second drawing illustrating movement of the vertical motor of the robot according to the embodiment;
FIG. 8 is a block diagram illustrating the functional configuration of the robot according to the embodiment;
FIG. 9 is a drawing illustrating an example of an emotion map according to the embodiment;
FIG. 10 is a first drawing illustrating an example in which an emotion parameter moves on the emotion map according to the embodiment;
FIG. 11 is a second drawing illustrating an example in which the emotion parameter moves on the emotion map according to the embodiment;
FIG. 12 is a drawing illustrating an example of an event management table according to the embodiment;
FIG. 13 is a drawing illustrating a first example of a distribution of a correction value according to the embodiment;
FIG. 14 is a drawing illustrating a second example of the distribution of the correction value according to the embodiment;
FIG. 15 is a drawing illustrating an example of a lookup table according to the embodiment;
FIG. 16 is a third drawing illustrating an example in which the emotion parameter moves on the emotion map according to the embodiment;
FIG. 17 is a drawing illustrating an example of a history buffer according to the embodiment;
FIG. 18 is a drawing illustrating an example of a fluctuation component according to the embodiment;
FIG. 19 is a flowchart illustrating the flow of robot control processing according to the embodiment;
FIG. 20 is a flowchart illustrating the flow of movement vector calculation processing according to the embodiment; and
FIG. 21 is a flowchart illustrating the flow of interrupt processing according to the embodiment.

Hereinafter, embodiments of the present disclosure are described while referencing the drawings. Note that, in the drawings, identical or corresponding components are denoted with the same reference numerals.

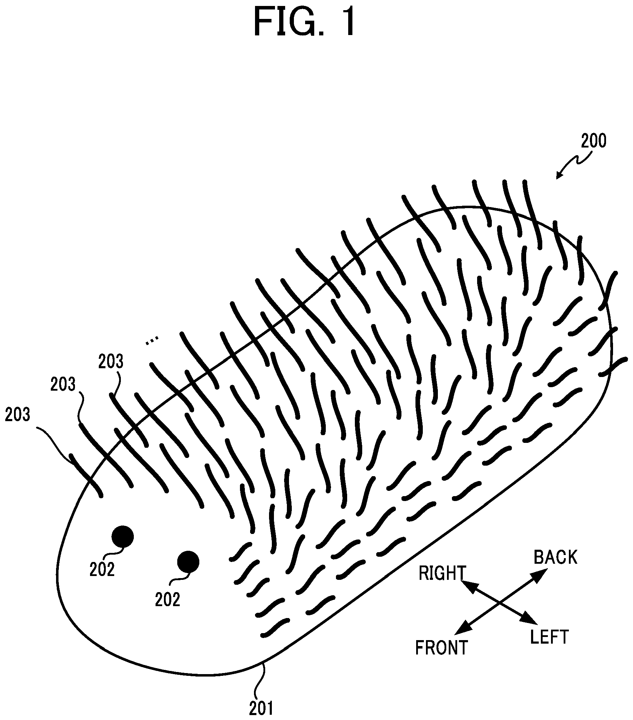

FIGS. 1 to 3 illustrate the appearance of a robot 200 according to the present embodiment. As illustrated in FIG. 1, the robot 200 is a pet robot that resembles a small animal. The robot 200 includes an exterior 201 provided with decorative parts 202 resembling eyes and bushy fur 203.

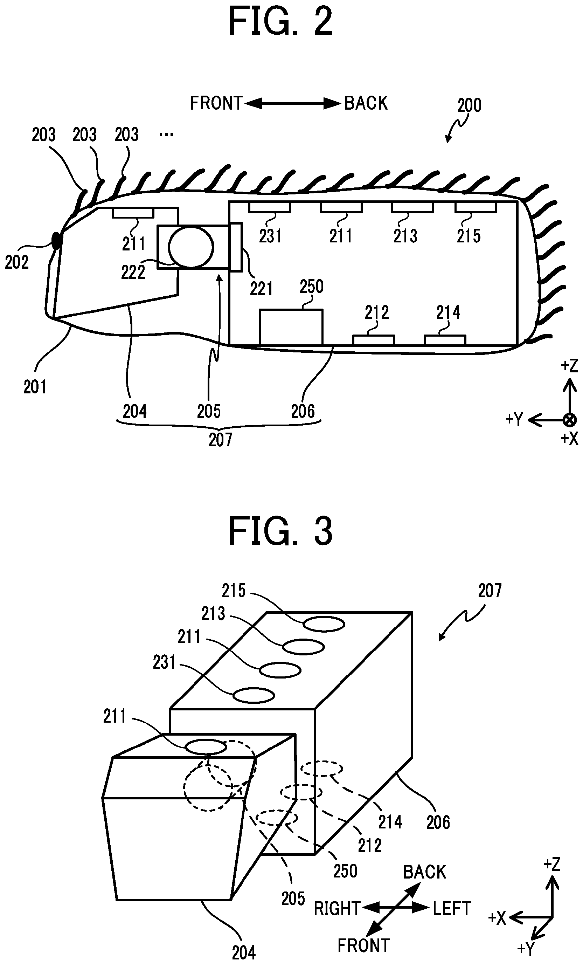

As illustrated in FIGS. 2 and 3, the robot 200 includes a housing 207. The housing 207 is covered by the exterior 201, and is accommodated inside the exterior 201. The housing 207 includes a head 204, a coupler 205, and a torso 206. The coupler 205 couples the head 204 to the torso 206.

The exterior 201 is an example of an exterior member, is elongated in a front-back direction, and has a bag-like shape that is capable of accommodating the housing 207 therein. The exterior 201 is formed in a barrel shape from the head 204 to the torso 206, and integrally covers the torso 206 and the head 204. Due to the exterior 201 having such a shape, the robot 200 is formed in a shape as if lying on its belly.

An outer material of the exterior 201 imitates the feel to touch of a small animal, and is formed from an artificial pile fabric that resembles the fur 203 of a small animal. A lining of the exterior 201 is formed from synthetic fibers, natural fibers, natural leather, artificial leather, a synthetic resin sheet material, a rubber sheet material, or the like. The exterior 201 is formed from such a flexible material and, as such, conforms to the movement of the housing 207. Specifically, the exterior 201 conforms to the rotation of the head 204 relative to the torso 206.

In order to configure so that the exterior 201 conforms to the movement of the housing 207, the exterior 201 is attached to the housing 207 by non-illustrated snap buttons. Specifically, at least one snap button is provided at the front of the head 204, and at least one snap button is provided at the rear of the torso 206. Moreover, snap buttons, that engage with the snap buttons provided on the head 204 and the torso 206, are also provided at corresponding positions of the exterior 201, and the exterior 201 is fixed to the housing 207 by the snap buttons. Note that the numbers and positions of the snap buttons are merely examples, and can be changed as desired.

The torso 206 extends in the front-back direction, and contacts, via the exterior 201, a placement surface such as a floor, a table, or the like on which the robot 200 is placed. The torso 206 includes a twist motor 221 at a front end thereof. The head 204 is coupled to the front end of the torso 206 via the coupler 205. The coupler 205 includes a vertical motor 222. Note that, in FIG. 2, the twist motor 221 is provided on the torso 206, but may be provided on the coupler 205. Due to the twist motor 221 and the vertical motor 222, the head 204 is coupled to the torso 206 so as to be rotatable, with a left-right direction and the front-back direction of the robot 200 as axes.

Note that, as XYZ coordinate axes, an X axis and a Y axis are set in the horizontal plane, and a Z axis is set in the vertical direction. The + direction of the Z axis corresponds to vertically upward. Moreover, to facilitate comprehension, in the following, a description is given in which the robot 200 is placed on the placement surface and oriented such that the left-right direction (the width direction) of the robot 200 is the X axis direction and the front-back direction of the robot 200 is the Y axis direction.

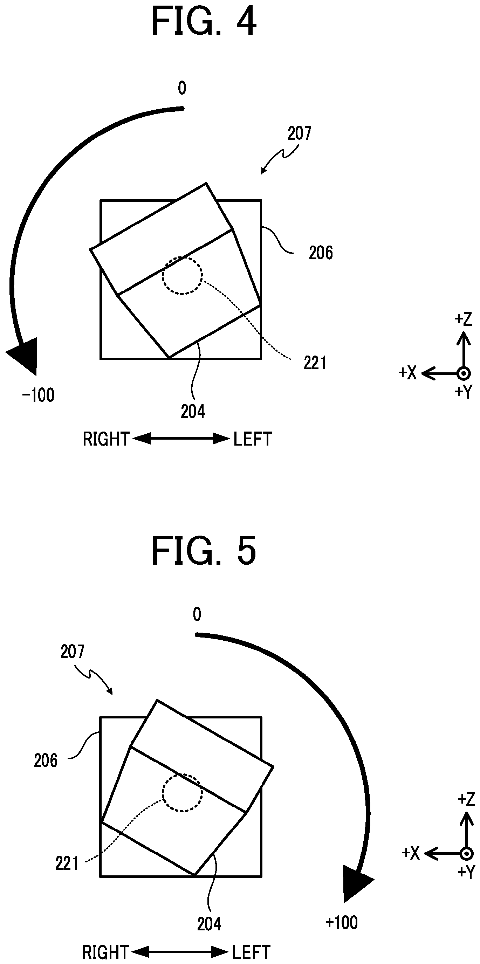

The coupler 205 couples the torso 206 and the head 204 so as to enable rotation around a first rotational axis that passes through the coupler 205 and extends in the front-back direction (the Y direction) of the torso 206. As illustrated in FIGS. 4 and 5, the twist motor 221 rotates the head 204, with respect to the torso 206, clockwise (right rotation) within a forward rotation angle range around the first rotational axis (forward rotation), counter-clockwise (left rotation) within a reverse rotation angle range around the first rotational axis (reverse rotation), and the like.

Note that, in this description, the term "clockwise" refers to clockwise when viewing the direction of the head 204 from the torso 206. Additionally, herein, clockwise rotation is also referred to as "twist rotation to the right", and counter-clockwise rotation is also referred to as "twist rotation to the left." A maximum value of an angle of twist rotation to the right or the left can be set as desired. In FIGS. 4 and 5, the angle of the head 204 in a state in which the head 204 is not twisted to the right or the left (hereinafter, "twist reference angle") is expressed by 0. An angle when twist rotated most to the left (rotated counter-clockwise) is expressed as -100, and an angle when twist rotated most to the right (rotated clockwise) is expressed as +100.

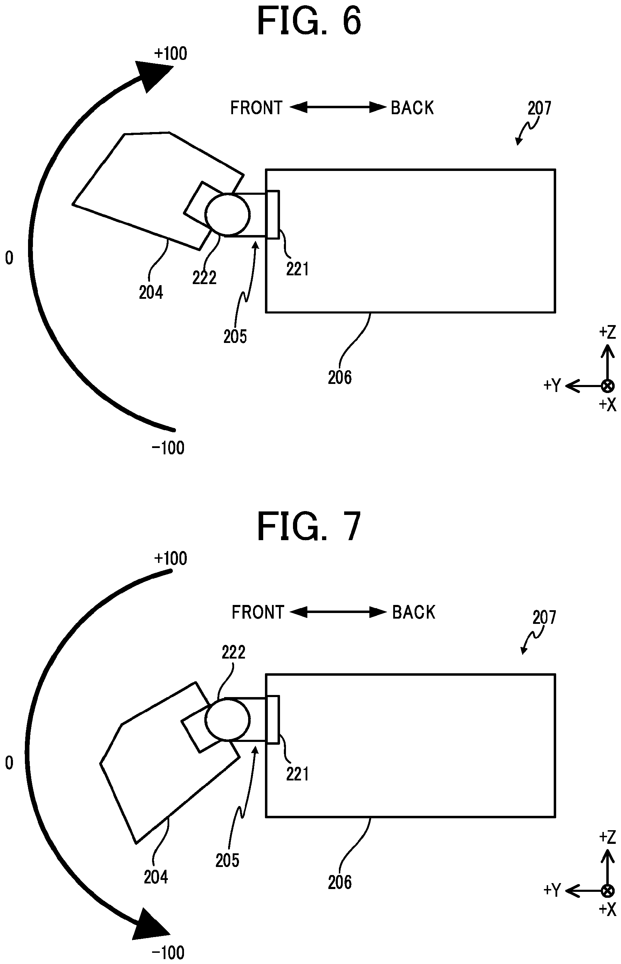

Additionally, the coupler 205 couples the torso 206 and the head 204 so as to enable rotation around a second rotational axis that passes through the coupler 205 and extends in the left-right direction (the width direction, the X direction) of the torso 206. As illustrated in FIGS. 6 and 7, the vertical motor 222 rotates the head 204 upward (forward rotation) within a forward rotation angle range around the second rotational axis, downward (reverse rotation) within a reverse rotation angle range around the second rotational axis, and the like.

A maximum value of the angle of rotation upward or downward can be set as desired, and, in FIGS. 6 and 7, the angle of the head 204 in a state in which the head 204 is not rotated upward or downward (hereinafter, "vertical reference angle") is expressed by 0, an angle when rotated most downward is expressed as -100, and an angle when rotated most upward is expressed as +100.

As illustrated in FIGS. 2 and 3, the robot 200 includes a touch sensor 211 on the head 204 and the torso 206. The robot 200 can detect, by the touch sensor 211, petting or striking of the head 204 or the torso 206 by the user.

The robot 200 includes, on the torso 206, an acceleration sensor 212, a microphone 213, a gyrosensor 214, an illuminance sensor 215, a speaker 231, and a battery 250. By using the acceleration sensor 212 and the gyrosensor 214, the robot 200 can detect a change of an attitude of the robot 200 itself, and can detect being picked up, the orientation being changed, being thrown, and the like by the user. The robot 200 can detect the ambient illuminance of the robot 200 by using the illuminance sensor 215. The robot 200 can detect external sounds by using the microphone 213. The robot 200 can emit sounds by using the speaker 231.

Note that, at least a portion of the acceleration sensor 212, the microphone 213, the gyrosensor 214, the illuminance sensor 215, and the speaker 231 is not limited to being provided on the torso 206 and may be provided on the head 204, or may be provided on both the torso 206 and the head 204.

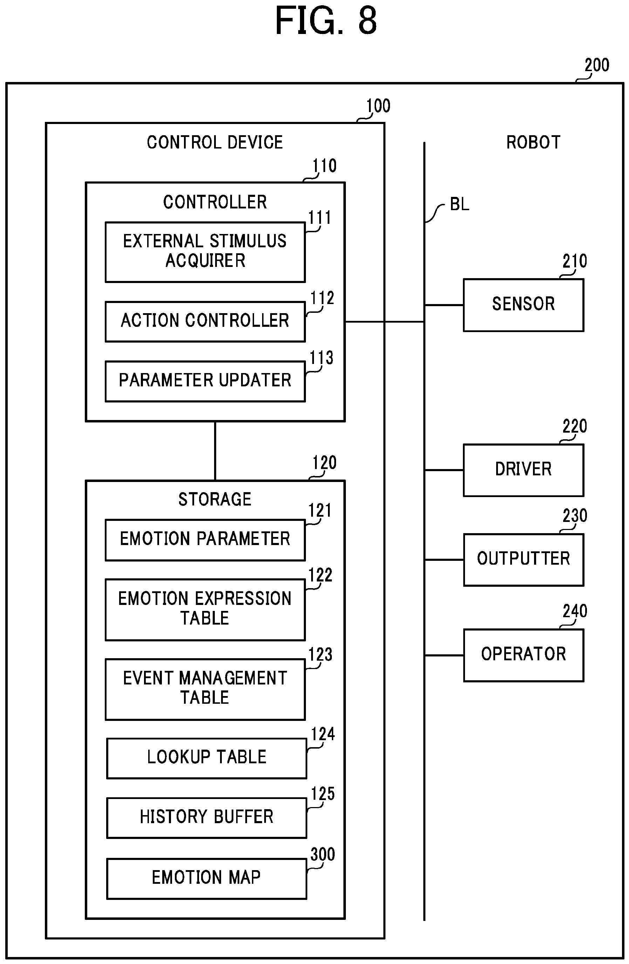

Next, the functional configuration of the robot 200 is described while referencing FIG. 8. As illustrated in FIG. 8, the robot 200 includes a control device 100, a sensor 210, a driver 220, an outputter 230, and an operator 240. In one example, these various components are connected via a bus line BL. Note that a configuration is possible in which, instead of the bus line BL, a wired interface such as a universal serial bus (USB) cable or the like, or a wireless interface such as Bluetooth (registered trademark) or the like is used.

The control device 100 includes a controller 110 and a storage 120. The control device 100 controls the actions of the robot 200 by the controller 110 and the storage 120.

The controller 110 includes a central processing unit (CPU). In one example, the CPU is a microprocessor or the like and is a central processing unit that executes a variety of processing and computations. In the controller 110, the CPU reads out a control program stored in the ROM and controls the behavior of the entire robot 200 while using the RAM as working memory. Additionally, while not illustrated in the drawings, the controller 110 is provided with a clock function, a timer function, and the like, and can measure the date and time, and the like. The controller 110 may also be called a "processor."

The storage 120 includes read-only memory (ROM), random access memory (RAM), flash memory, and the like. The storage 120 stores an operating system (OS), application programs, and other programs and data used by the controller 110 to perform the various processes. Moreover, the storage 120 stores data generated or acquired as a result of the controller 110 performing the various processes.

The sensor 210 includes the touch sensor 211, the acceleration sensor 212, the gyrosensor 214, and the microphone 213 described above. The controller 110 acquires, via the bus line BL and as an external stimulus, detection values detected by the various sensors of the sensor 210. Note that a configuration is possible in which the sensor 210 includes sensors other than the touch sensor 211, the acceleration sensor 212, the gyrosensor 214, and the microphone 213. The types of external stimuli acquirable by the controller 110 can be increased by increasing the types of sensors of the sensor 210.

The touch sensor 211 includes, for example, a pressure sensor and a capacitance sensor, and detects contacting by some sort of object. The controller 110 can, on the basis of detection values of the touch sensor 211, detect that the robot 200 is being pet, is being struck, and the like by the user.

The acceleration sensor 212 detects an acceleration applied to the torso 206 of the robot 200. The acceleration sensor 212 detects acceleration in each of the X axis direction, the Y axis direction, and the Z axis direction. That is, the acceleration sensor 212 detects acceleration on three axes.

In one example, the acceleration sensor 212 detects gravitational acceleration when the robot 200 is stationary. The controller 110 can detect the current attitude of the robot 200 on the basis of the gravitational acceleration detected by the acceleration sensor 212. In other words, the controller 110 can detect whether the housing 207 of the robot 200 is inclined from the horizontal direction on the basis of the gravitational acceleration detected by the acceleration sensor 212. Thus, the acceleration sensor 212 functions as incline detecting means that detects the inclination of the robot 200.

Additionally, when the user picks up or throws the robot 200, the acceleration sensor 212 detects, in addition to the gravitational acceleration, acceleration caused by the movement of the robot 200. Accordingly, the controller 110 can detect the passive movement of the robot 200 by removing the gravitational acceleration component from the detection value detected by the acceleration sensor 212.

The gyrosensor 214 detects an angular velocity from when rotation is applied to the torso 206 of the robot 200. Specifically, the gyrosensor 214 detects the angular velocity on three axes of rotation, namely rotation around the X axis direction, rotation around the Y axis direction, and rotation around the Z axis direction. It is possible to more accurately detect the passive movement of the robot 200 by combining the detection value detected by the acceleration sensor 212 and the detection value detected by the gyrosensor 214.

Note that, at a synchronized timing (for example every 0.25 seconds), the touch sensor 211, the acceleration sensor 212, and the gyrosensor 214 respectively detect the strength of contact, the acceleration, and the angular velocity, and output the detection values to the controller 110.

The microphone 213 detects ambient sound of the robot 200. The controller 110 can, for example, detect, on the basis of a component of the sound detected by the microphone 213, that the user is speaking to the robot 200, that the user is clapping their hands, and the like.

The illuminance sensor 215 detects the illuminance of the surroundings of the robot 200. The controller 110 can detect that the surroundings of the robot 200 have become brighter or darker on the basis of the illuminance detected by the illuminance sensor 215.

The driver 220 includes the twist motor 221 and the vertical motor 222, and is driven by the controller 110. The twist motor 221 is a servo motor for rotating the head 204, with respect to the torso 206, in the left-right direction (the width direction) with the front-back direction as an axis. The vertical motor 222 is a servo motor for rotating the head 204, with respect to the torso 206, in the up-down direction (height direction) with the left-right direction as an axis. The robot 200 can express actions of turning the head 204 to the side by using the twist motor 221, and can express actions of lifting/lowering the head 204 by using the vertical motor 222.

The outputter 230 includes the speaker 231, and sound is output from the speaker 231 as a result of sound data being input into the outputter 230 by the controller 110. For example, the robot 200 emits a pseudo-animal sound as a result of the controller 110 inputting animal sound data of the robot 200 into the outputter 230.

A configuration is possible in which, instead of the speaker 231, or in addition to the speaker 231, a display such as a liquid crystal display, a light emitter such as a light emitting diode (LED), or the like is provided as the outputter 230, and emotions such as joy, sadness, and the like are displayed on the display, expressed by the color and brightness of the emitted light, or the like.

The operator 240 includes an operation button, a volume knob, or the like. In one example, the operator 240 is an interface for receiving user operations such as turning the power ON/OFF, adjusting the volume of the output sound, and the like.

The battery 250 stores power to be used in the robot 200. When the robot 200 has returned to the charging station, the battery 250 is charged by the charging station.

Next, the functional configuration of the controller 110 is described. As illustrated in FIG. 8, the controller 110 functionally includes an external stimulus acquirer 111 that is an example of external stimulus acquiring means, an action controller 112 that is an example of action controlling means, and a parameter updater 113 that is an example of parameter updating means. In the controller 110, the CPU performs control and reads the program stored in the ROM out to the RAM and executes that program, thereby functioning as the various components described above.

The storage 120 stores an emotion parameter 121, an emotion expression table 122, an event management table 123, a lookup table 124, a history buffer 125, and an emotion map 300.

The external stimulus acquirer 111 acquires an external stimulus. The external stimulus is a stimulus that acts on the robot 200 from outside the robot 200. Examples of types of the external stimulus include "there is a loud sound", "spoken to", "petted", "picked up", "turned upside down", "became brighter", "became darker", and the like. In the following, the types of external stimuli are also referred to as "events."

The external stimulus acquirer 111 acquires the external stimulus on the basis of detection values from the sensor 210. More specifically, the external stimulus acquirer 111 acquires a plurality of external stimuli of mutually different types by the plurality of sensors (the touch sensor 211, the acceleration sensor 212, the microphone 213, the gyrosensor 214, and the illuminance sensor 215) of the sensor 210.

In one example, the external stimulus acquirer 111 acquires the external stimulus of "there is a loud sound" or "spoken to" by the microphone 213. The external stimulus acquirer 111 acquires the external stimulus of "petted" by the touch sensor 211. The external stimulus acquirer 111 acquires the external stimulus of "picked up", or "turned upside down" by the acceleration sensor 212 and the gyrosensor 214. The external stimulus acquirer 111 acquires the external stimulus of "became brighter" or "became darker" by the illuminance sensor 215.

When an external stimulus is acquired by the external stimulus acquirer 111, the action controller 112 causes the robot 200 to execute a corresponding action that is an action corresponding to the type of the acquired external stimulus. For example, in the case of "there is a loud sound", the action controller 112 causes the robot 200 to execute a surprised action. In the case of "spoken to", the action controller 112 causes the robot 200 to execute an action of reacting to being spoken to. In the case of "turned upside down", the action controller 112 causes the robot 200 to execute an action of expressing an unpleasant reaction. In the case of "petted", the action controller 112 causes the robot 200 to execute an action of rejoicing.

Here, the action that the action controller 112 causes the robot 200 to execute is realized by a motion by the driver 220 and/or an output by the outputter 230. Specifically, the motion by the driver 220 corresponds to rotating the head 204 by the driving of the twist motor 221 or the vertical motor 222. The output by the outputter 230 corresponds to outputting a sound from the speaker 231, displaying an image on the display, or causing the LED to emit light. The actions of the robot 200 may also be called gestures, behaviors, or the like of the robot 200.

Although omitted from the drawings, the correspondence between the type of the external stimulus and the corresponding action is stored in advance in the storage 120 as an action table. The action controller 112 references the action table and causes the robot 200 to execute the corresponding action corresponding to the type of the external stimulus acquired by the external stimulus acquirer 111.

Note that, when an external stimulus is not acquired by the external stimulus acquirer 111, the action controller 112 causes the robot 200 to execute a spontaneous action. The phrase "spontaneous action" means an action that is not dependent on an external stimulus such as, for example, an action imitating breathing, or the like.

The parameter updater 113 updates the emotion parameter 121 in accordance with the type of the external stimulus acquired by the external stimulus acquirer 111. The emotion parameter 121 is a parameter expressing the pseudo-emotion of the robot 200. The emotion parameter 121 is set in order to cause the robot 200 to express degrees of expression of pseudo-emotions to enable the robot 200 to imitate the actions of a living organism. The robot 200 acts in accordance with the emotion parameter 121.

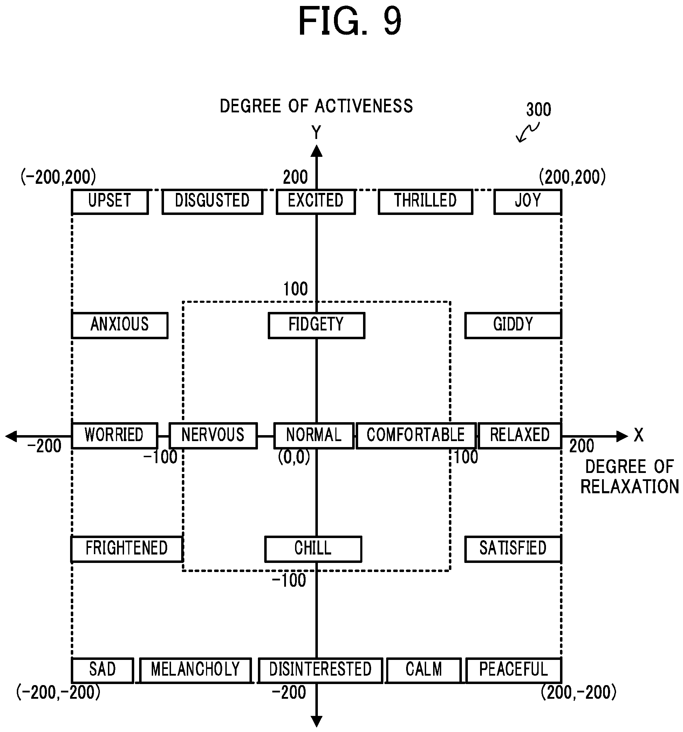

More specifically, the emotion parameter 121 is expressed by a position on a positioning map that has at least two coordinate axes. The positioning map is a map that expresses positions by coordinate values of at least two coordinate axes, such as (X, Y), (X, Y, Z), or the like. In the following, a description is given in which the emotion map 300 illustrated in FIG. 9 is used as an example of the positioning map.

As illustrated in FIG. 9, the emotion map 300 is expressed by the two-dimensional coordinate system, and has an X axis that is a first coordinate axis for expressing a pseudo degree of relaxation, and a Y axis that is a second coordinate axis for expressing a pseudo degree of activeness. As the value of the X coordinate (X value) is positive and the absolute value thereof increases, emotions for which the degree of relaxation is high are expressed and, as the value of the Y coordinate (Y value) is positive and the absolute value thereof increases, emotions for which a degree of excitement is high are expressed. Additionally, as the X value is negative and the absolute value thereof increases, emotions for which a degree of worry is high are expressed and, as the Y value is negative and the absolute value thereof increases, emotions for which a degree of disinterest is high are expressed.

The emotion parameter 121 is expressed by coordinate values (X, Y), that are the position on the emotion map 300, using an X value expressing this degree of relaxation and degree of worry and a Y value expressing this degree of excitement and degree of disinterest. For example, when both the X value and the Y value are positive and large, the emotion parameter 121 expresses the emotion of "Joy." When the X value is negative and large and the Y value is positive and large, the emotion parameter 121 expresses the emotion of "Upset." When both the X value and the Y value are negative and large, the emotion parameter 121 expresses the emotion of "Sad." When the X value is positive and large and the Y value is negative and large, the emotion parameter 121 expresses the emotion of "Peaceful."

An origin (0, 0) on the emotion map 300 represents an emotion when normal. An initial value of the emotion parameter 121 is the origin (0, 0). Regarding the size of the emotion map 300, a maximum value of both the X value and the Y value is 200 and a minimum value is -200.

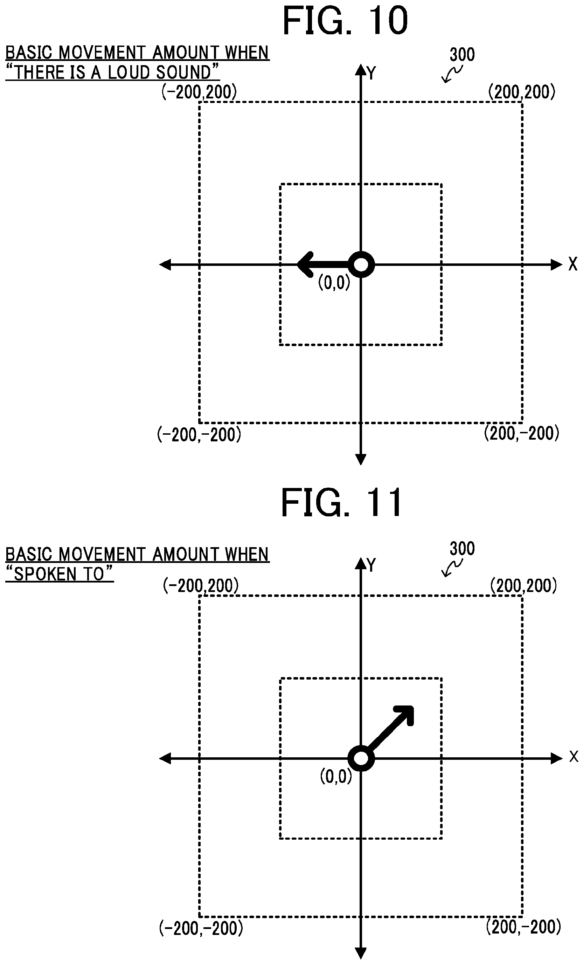

The parameter updater 113 updates the emotion parameter 121 by moving the position of the emotion parameter 121 on the emotion map 300. For example, when an external stimulus of the type "there is a loud sound" is acquired by the external stimulus acquirer 111, the parameter updater 113 moves the emotion parameter 121 to the left on the emotion map 300 as illustrated in FIG. 10. As a result, the emotion of worry increases. Alternatively, when an external stimulus of the type "petted" is acquired by the external stimulus acquirer 111, the parameter updater 113 moves the emotion parameter 121 up and to the right on the emotion map 300 as illustrated in FIG. 11. As a result, the emotion of joy increases.

More specifically, the parameter updater 113 derives, in accordance with Equation (1) below, a movement vector (NextX, NextY) expressing a movement direction and a movement amount of the emotion parameter 121 on the emotion map 300. To accomplish this, the parameter updater 113 acquires coefficients $\alpha$, L, Px, Py, Fx, Fy, dX, and dY. Note that, the symbol "*" in Equation (1) represents multiplication.

$$(NextX, NextY) = \alpha*L*(Px*Fx*dX, Py*Fy*dY)$$

$$(1)$$

Firstly, the parameter updater 113 acquires basic movement amounts dX, dY of the emotion parameter 121. The basic movement amounts dX, dY are evaluation values corresponding to the type of the external stimulus acquired by the external stimulus acquirer 111. To achieve this, the parameter updater 113 references the event management table 123.

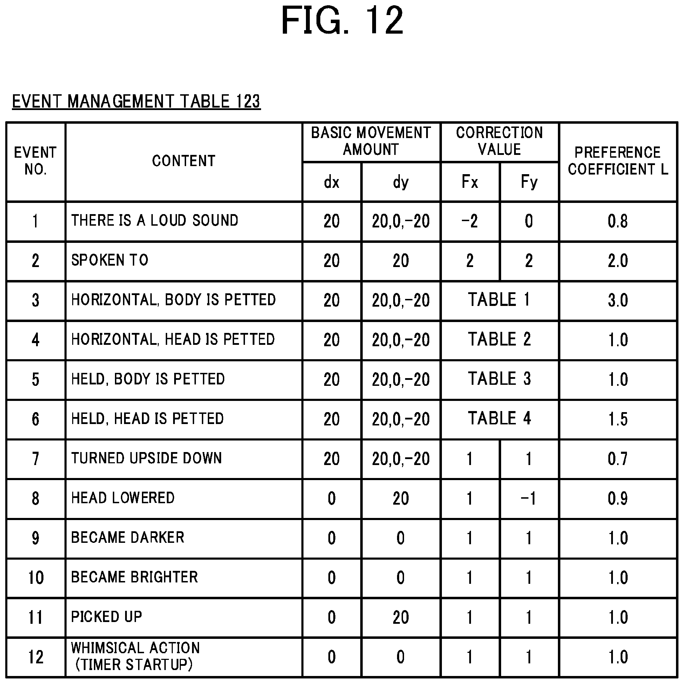

The event management table 123 is a table for managing the events (the types of external stimuli) that occur with respect to the robot 200. Specifically, as illustrated in FIG. 12, the event management table 123 associates and defines the basic movement amounts dX, dY, correction values Fx, Fy, and a preference coefficient L for each of the plurality of events that may occur.

When an external stimulus is acquired by the external stimulus acquirer 111, the parameter updater 113 identifies the event corresponding to the acquired external stimulus from among the plurality of events defined in the event management table 123. Then, the parameter updater 113 reads out, from the event management table 123, the basic movement amounts dX, dY associated with the identified event.

Note that, when a plurality of values of basic movement amounts dX, dY associated with the identified event exists in the event management table 123, the parameter updater 113 randomly selects values from among the plurality of values.

Secondly, the parameter updater 113 acquires the correction values Fx, Fy. Here, the correction values Fx, Fy are coefficients for correcting the movement direction and the movement amount of the emotion parameter 121 on the emotion map 300. The correction values Fx, Fy are associated with each of the plurality of events in the event management table 123. As with the basic movement amounts dX, dY, the parameter updater 113 references the event management table 123 and reads out the correction values Fx, Fy associated with the identified event.

More specifically, in accordance with the event, there are cases in which the correction values Fx, Fy are defined by fixed values, and cases in which the correction values Fx, Fy are defined as variable values that depend on the current position of the emotion parameter 121 on the emotion map 300.

In the example of the event management table 123 illustrated in FIG. 12, the correction values Fx, Fy associated with the events having Event Nos. 1, 2, and 7 to 12 are defined by fixed values. When the type of the external stimulus acquired by the external stimulus acquirer 111 matches the event of any of Event Nos. 1, 2, and 7 to 12, the parameter updater 113 reads out the correction values Fx, Fy, that are fixed values, from the event management table 123.

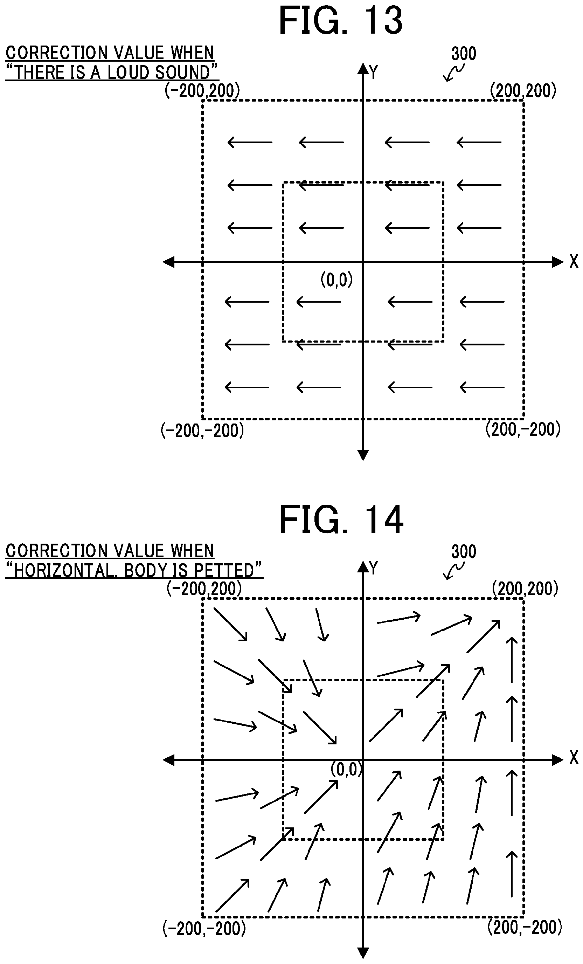

As one example, FIG. 13 illustrates, on the emotion map 300, a two-dimensional distribution of the correction values Fx, Fy for the case of Event No. 1, namely, "there is a loud sound." In the event management table 123, the correction values Fx, Fy associated with Event No. 1 are fixed values (-2, 0). As such, as illustrated in FIG. 13, the direction of the correction values Fx, Fy associated with Event No. 1 is set to the -X direction, regardless of the position on the emotion map 300

In contrast, the correction values Fx, Fy associated with Event Nos. 3 to 6 are not fixed values but, rather, are defined as variable values corresponding to the position on the emotion map 300. As one example, FIG. 14 illustrates, on the emotion map 300, a two-dimensional distribution of the correction values Fx, Fy for the case of Event No. 3, namely, "horizontal, and body petted." In this example, in a second quadrant in which the X value is negative and the Y value is positive, and in a third quadrant in which both the X value and the Y value are negative, the direction of the correction values Fx, Fy is set to a direction toward the origin (0, 0). Additionally, in a first quadrant in which the X value and the Y value are both positive, and in a fourth quadrant in which the X value is positive and the Y value is negative, the direction of the correction values Fx, Fy is set to a direction toward upper right coordinate values (200, 200).

In other words, the correction values Fx, Fy of Event No. 3 correct so as to move the position of the emotion parameter 121 closer to the origin that is a reference position on the emotion map 300 in the second and third quadrants, and correct so as to move the position of the emotion parameter 121 closer to the upper right position on the emotion map 300 in the first and fourth quadrants. Note that the correction values Fx, Fy of Event Nos. 4 to 6 are described as demonstrating the same tendencies as Event No. 1.

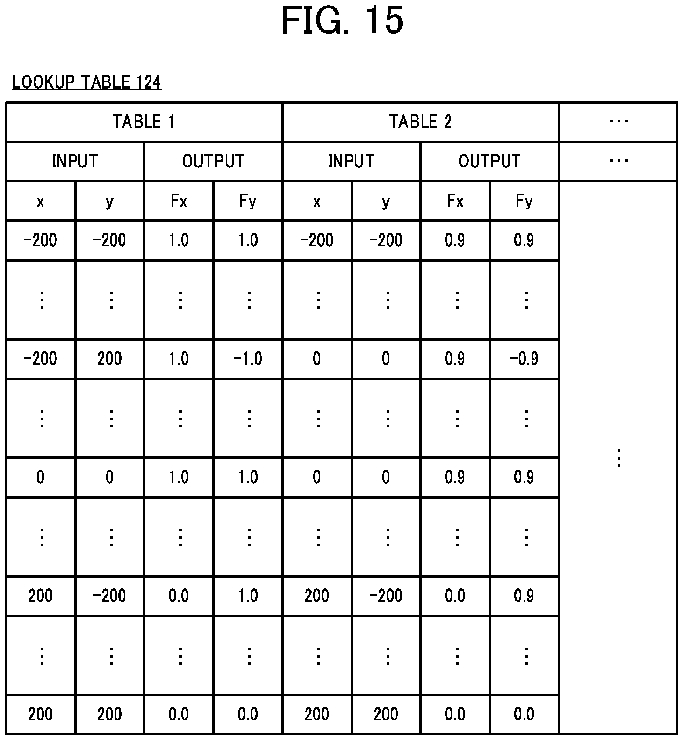

These correction values Fx, Fy that are variable values are defined in the lookup table 124. FIG. 15 illustrates an example of the lookup table 124. The lookup table 124 includes Tables 1 to 4 that correspond to Event Nos. 3 to 6. The Tables 1 to 4 define, as values that depend on the current position of the emotion parameter 121 on the emotion map 300, the correction values Fx, Fy to be used when the external stimuli of events 3 to 6 are acquired, respectively,

More specifically, each of the Tables 1 to 4 associate and define the current position of the emotion parameter 121 on the emotion map 300, which is an input value, and the correction values Fx, Fy, which are output values. When the type of the external stimulus acquired by the external stimulus acquirer 111 matches the event of any of Event Nos. 3 to 6, the parameter updater 113 references the event management table 123 and identifies the table in which the correction values Fx, Fy corresponding to the type of the acquired external stimulus are defined. Then, the parameter updater 113 references the lookup table 124 and reads out the correction values Fx, Fy associated with the current position of the emotion parameter 121 in the identified table.

Thus, when defined as variable values that correspond to the position of the emotion parameter 121, the correction values Fx, Fy correct so as to move the position of the emotion parameter 121 closer to the origin or the upper right position that are reference positions on the emotion map 300.

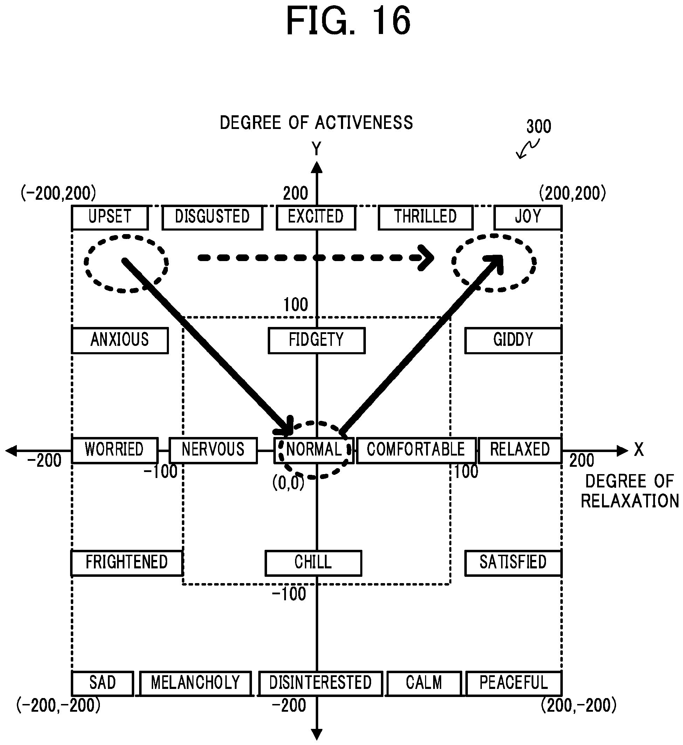

A reason for correcting the position of the emotion parameter 121 using the correction values Fx, Fy described above is because it is difficult to express the natural emotion changes of a living organism using the basic movement amounts dX, dY alone. Specifically, an example of a case is described in which, as illustrated in FIG. 16, in a state in which the emotion parameter 121 is in the second quadrant of the emotion map 300, the emotion parameter 121 moves to the first quadrant of the emotion map 300 in response to the external stimulus of one of Event Nos. 3 to 6.

When using only the basic movement amounts dX, dY to move the position of the emotion parameter 121, the emotion parameter 121 moves from the upper left on the emotion map 300 toward the upper right without passing through the origin, as illustrated by the dashed line arrow of FIG. 16. As such, the pseudo-emotion of the robot 200 changes from "upset" to "joy", through "excited."

It is unnatural as an emotion change of a real living organism for "excited" to be passed through when changing from an emotion of "upset" to "joy." When the emotion of a real living organism changes from "upset" to "joy", the emotion tends to return to "normal" from "upset", and then change to "joy." Considering this tendency of emotion change, the correction values Fx, Fy illustrated in FIGS. 14 and 15 are set so as to correct so as to move the position of the emotion parameter 121 on the emotion map 300 closer to the origin in the second and third quadrants, and so as to correct so as to move the position of the emotion parameter 121 on the emotion map 300 closer to the upper right position in the first and fourth quadrants.

When moving the position of the emotion parameter 121 by adding these correction values Fx, Fy to the basic movement amounts dX, dY, the emotion parameter 121, namely the pseudo-emotion of the robot 200, changes from "upset" to "normal", and then to "joy", as illustrated by the solid line arrow of FIG. 16. As a result, it is possible to more realistically imitate the emotion changes of a living organism when the position of the emotion parameter 121 on the emotion map 300 moves through a plurality of different quadrants.

Thirdly, the parameter updater 113 acquires personality coefficients Px, Py. The personality coefficients Px, Py are coefficients that express a pseudo-personality of the robot 200. The pseudo-personality of the robot 200 is a parameter set for every individual robot 200 in order to impart individuality to the robot 200.

In one example, the personality of the robot 200 is defined by four types of personality values, namely "chipper", "active", "shy", and "spoiled." These four types of personality values may be provided in advance to the robot 200 as fixed values, or may change with the passage of time. The parameter updater 113 calculates the personality coefficients Px, Py in accordance with Equation (2) below from the four types of personality values set in the robot 200.

$$\text{When dX>0, Px} = (10 + \text{personality value of chipper})/20$$

$$\text{When dX} \leq 0, \text{Px} = (10 + \text{personality value of shy})/20$$

$$\text{When dY>0, Py} = (10 + \text{personality value of active})/20$$

$$\text{When dY} \leq 0, \text{Py} = (10 + \text{personality value of spoiled})/20$$

$$(2)$$

Specifically, the parameter updater 113 calculates the personality coefficients Px, Py in accordance with an equation that differs in accordance with whether the basic movement amounts dX, dY are positive. For example, when the four types of personality values set to the robot 200 are "chipper = 0, active = 1, shy = 2, and spoiled = 10", the parameter updater 113 calculates the personality coefficients Px, Py as in Equation (3) below.

$$\text{When dX>0, Px} = (10+0)/20 = 0.50$$

$$\text{When dX} \leq 0, \text{Px} = (10+2)/20 = 0.60$$

$$\text{When dY>0, Py} = (10+1)/20 = 0.55$$

$$\text{When dY} \leq 0, \text{Py} = (10+10)/20 = 1.00$$

$$(3)$$

Fourthly, the parameter updater 113 acquires the preference coefficient L. The preference coefficient L is a coefficient that expresses a pseudo-preference of the robot 200 for the external stimulus (event). The preference coefficient L is set for every individual robot 200 in order to impart individuality to the robot 200.

The preference coefficient L is associated with each of the plurality of events in the event management table 123. As with the basic movement amounts dX, dY and the correction values Fx, Fy, the parameter updater 113 references the event management table 123 and reads out the preference coefficient L associated with the identified event.

As one example, the preference coefficient L is a value greater than 1.0 for events that the robot 200 likes, is a value less than 1.0 for events that the robot 200 hates, and is 1.0 for other events. In the example of the event management table 123 illustrated in FIG. 12, when the robot 200 likes being spoken to, the preference coefficient L corresponding to "spoken to" is set to 2.0. When the robot 200 hates being turned upside down, the preference coefficient L corresponding to "turned upside down" is set to 0.7. Thus, the preference coefficient L is set as a fixed value for the robot 200 for every event.

Fifthly, the parameter updater 113 acquires a history coefficient $\alpha$. The history coefficient $\alpha$ is a coefficient based on the history of past events, and is a coefficient that expresses a past occurrence frequency of the external stimulus acquired by the external stimulus acquirer 111.

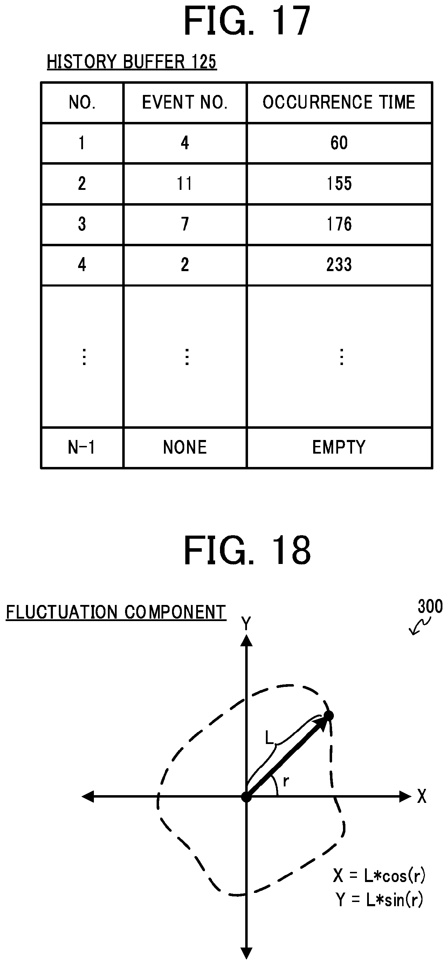

The parameter updater 113 references the history buffer 125 in order to acquire the history coefficient $\alpha$. The history buffer 125 accumulates data about external stimuli acquired in the past by the external stimulus acquirer 111. As one example, as illustrated in FIG. 17, the history buffer 125 associates Event Nos. of events that occurred in the past with occurrence times thereof, and stores the associated information. When the external stimulus acquirer 111 acquires an external stimulus, the external stimulus acquirer 111 associates the Event No. that indicates the type of the acquired external stimulus with the occurrence time that is the time at which the external stimulus is acquired, and stores the associated information in the history buffer 125.

More specifically, the history buffer 125 has a ring buffer structure. In other words, an upper limit is provided for the number of pieces of data that can be stored in the history buffer 125 (in the example of FIG. 17, N pieces). When a new piece of data is to be stored in the history buffer 125 in a state in which N pieces of data are already stored in the history buffer 125, the data for which the occurrence time is the oldest among the N pieces of data stored in the history buffer 125 is deleted. Additionally, a configuration is possible in which old data is deleted every set amount of time, even when there is available space in the history buffer 125.

The parameter updater 113 references the history buffer 125 and calculates the occurrence frequency of the event for every event. Then, the parameter updater 113 derives the history coefficient $\alpha$ for every event in accordance with the occurrence frequency.

Generally, events that have lower occurrence frequencies are events that the robot 200 is not used to and, as such, the stimulus experienced when such an event occurs is great. In contrast, events that have higher occurrence frequencies are events that the robot 200 is used to and, as such, the stimulus experienced when such an event occurs is small.

Accordingly, when an event occurs for which the occurrence frequency is lower, the parameter updater 113 sets the history coefficient $\alpha$ to a value greater than 1.0 so as to greatly move the position of the emotion parameter 121 on the emotion map 300 from the current position. Additionally, when an event occurs for which the occurrence frequency is higher, the parameter updater 113 sets the history coefficient $\alpha$ to a value less than 1.0 so as not to greatly move the position of the emotion parameter 121 on the emotion map 300 from the current position.

When the basic movement amounts dX, dY, the correction values Fx, Fy, the personality coefficients Px, Py, the preference coefficient L, and the history coefficient $\alpha$ are acquired as described above, the parameter updater 113 calculates the movement vector (NextX, NextY) in accordance with Equation (1) above.

When the movement vector (NextX, NextY) is calculated, the parameter updater 113 calculates a fluctuation component in order to perform fluctuation control. The fluctuation component is a parameter for setting so that the emotion parameter 121 changes naturally. Specifically, as illustrated in FIG. 18, the fluctuation component is expressed by polar coordinates using a length Len that is a radius component and an angle r that is an angle component.

The parameter updater 113 calculates, in accordance with Equation (4) below, a final movement vector (Nx, Ny) that includes the fluctuation component.

$$(Nx, Ny) = YURAGI(NextX, NextY)$$

$$Nx = Len*cos(r)+NextX$$

$$Ny = Len*sin(r)+NextY$$

$$(4)$$

More specifically, since a continuous change is desirable for the fluctuation component, the length Len and the angle r are set as in Equation (5) below using random numbers. In Equation (5), rand() randomly takes a value in a range of +1 to -1 every set amount of time (for example, every one minute).

$$Len = Len+rand()$$

$$r = r+rand()$$

$$(5)$$

By using such random numbers, an initial value of the length Len is 0, and the length Len takes a random value in a range of -50 to +50. Additionally, an initial value of the angle r is 0, and the angle r takes a random value in a range of -360° to +360°.

More specifically, the angle r is set so as to go around once in a predetermined period (for example a period of about one day) so as to configure so that the fluctuation component simulates the daily mood changes and biorhythms of a living organism. In other words, the angle r is not completely randomly set but, rather, is set to a random value under the restriction that the amount of change in the predetermined period is 360°.

When the movement vector (Nx, Ny) that includes the fluctuation component described above is calculated, the parameter updater 113 moves the position of the emotion parameter 121 on the emotion map 300 in accordance with the calculated movement vector (Nx, Ny). Specifically, the parameter updater 113 moves the position of the emotion parameter 121 on the emotion map 300 to a target position of coordinate values (X0+Nx, Y0+Ny) obtained by adding the movement vector (Nx, Ny) to the coordinate values (X0, Y0) of the current position of the emotion parameter 121.

Here, the movement vector (Nx, Ny) is derived on the basis of the correction values Fx, Fy that correct so as to move the position of the emotion parameter 121 closer to the reference position on the emotion map 300. As such, the position of the emotion parameter 121 changes from "upset" to "normal", and then to "joy", as illustrated by the solid line arrow of FIG. 16. Thus, when the parameter updater 113 moves the position of the emotion parameter 121 on the emotion map 300 across a plurality of different quadrants, the parameter updater 113 moves the position of the emotion parameter 121 from the current position toward the reference position, and then to the target position. As a result, it is possible to express the natural change of emotions of a living organism.

Note that, in addition to updating the emotion parameter 121 in accordance with the external stimulus, the parameter updater 113 updates the emotion parameter 121 even when there is no external stimulus occurring. Specifically, the parameter updater 113 updates the emotion parameter 121 in accordance with the external stimulus acquired by the external stimulus acquirer 111 and, then, in a period until the next external stimulus is acquired by the external stimulus acquirer 111, moves the position of the emotion parameter 121 on the emotion map 300 closer to the origin (0, 0), that is the reference position, as time passes. As a result, during the period in which there is no external stimulus occurring, the pseudo-emotion of the robot 200 gradually returns to the normal state.

The action controller 112 causes the robot 200 to act in accordance with the emotion parameter 121 updated by the parameter updater 113. In other words, when a predetermined timing arrives after the emotion parameter 121 has been updated by the parameter updater 113, the action controller 112 causes the robot 200 to execute an emotion action that is an action corresponding to the updated emotion parameter 121.

In one example, when the emotion parameter 121 expresses "joy", the action controller 112 causes the robot 200 to execute an action that gives the impression of being joyous and, when the emotion parameter 121 expresses "sad", the action controller 112 causes the robot 200 to execute an action that gives the impression of being sad. Alternatively, when the emotion parameter 121 expresses "joy", the action controller 112 causes the outputter 230 to output a sound that gives the impression of being j oyous and, when the emotion parameter 121 expresses "sad", the action controller 112 causes the outputter 230 to output a sound that gives the impression of being sad. A configuration is possible in which, when the outputter 230 includes a display, an LED, or the like, the action controller 112 displays emotions such as joy, sad, and the like on the display, expresses such emotions by the color and brightness of the emitted light, or the like.

More specifically, the action controller 112 references the emotion expression table 122 and causes the robot 200 to execute an action corresponding to the emotion parameter 121 updated by the parameter updater 113. The emotion expression table 122 is a table that defines an action corresponding to each emotion expressed by coordinates on the emotion map 300. In one example, the emotion expression table 122 is expressed by a two-dimensional matrix $[X'] [Y']$.

The values of $X'$ and $Y'$ in the emotion expression table 122 correspond to the coordinate values $(X, Y)$ on the emotion map 300. Specifically, the values of $X'$ and $Y'$ in the emotion expression table 122 correspond to values (rounded off to the nearest whole number) obtained by dividing the coordinate values $(X, Y)$ on the emotion map 300 by a reference multiplication value. In one example, when the reference multiplication value is 100, the values of $X'$ and $Y'$ can take five values, namely -2, -1, 0, 1, and 2 for the range (-200 to +200) of the coordinate vales $(X, Y)$ on the emotion map 300. In this case, the emotion expression table 122 defines $5 \times 5 = 25$ types of actions.

The action controller 112 identifies the values of $X'$ and $Y'$ corresponding to the coordinate vales $(X, Y)$ of the emotion parameter 121 on the emotion map 300. Then, the action controller 112 causes the robot 200 to execute the action expressed in the emotion expression table 122 by the identified $X'$ and $Y'$

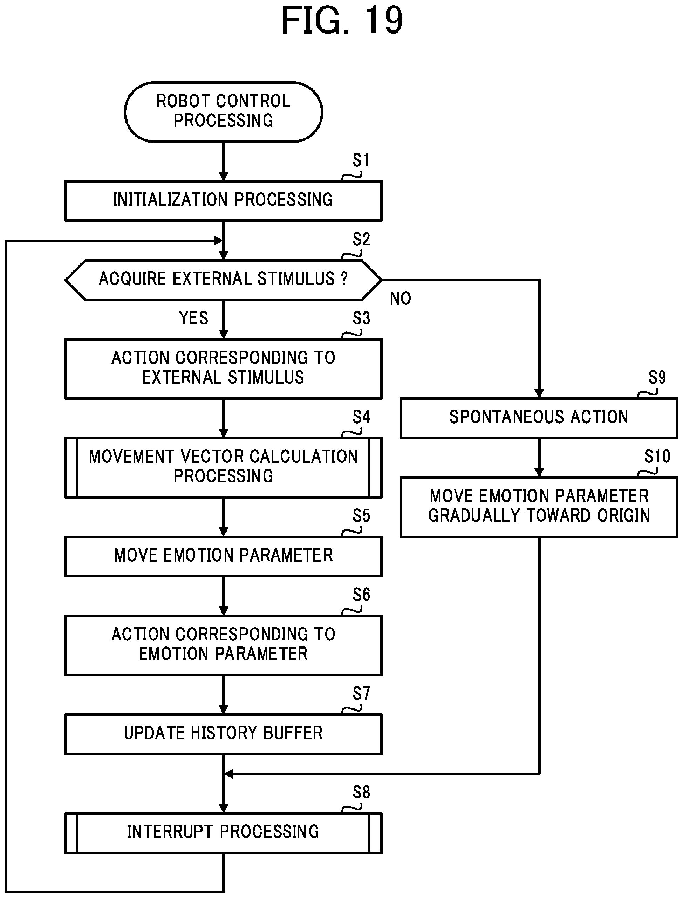

Next, the flow of robot control processing according to the present embodiment is described while referencing FIG. 19. The robot control processing illustrated in FIG. 19 is executed by the controller 110 of the control device 100, with the power of the robot 200 being turned ON as a trigger. The robot control processing illustrated in FIG. 19 is an example of a robot control method.

When the robot control processing starts, the controller 110 executes initialization processing (step S1). In the initialization processing, the controller 110 sets the position of the emotion parameter 121 on the emotion map 300 to the origin, and sets the values of the movement vector (NextX, NextY) and (Nx, Ny), and the values of the fluctuation component (L, r) to 0. Additionally, the controller 110 sets a system timer to 0, and deletes all of the data of the Event Nos. and occurrence times stored in the history buffer 125.

When the initialization processing is executed, the controller 110 functions as the external stimulus acquirer 111, and determines whether an external stimulus is acquired (step S2). Specifically, the controller 110 determines, on the basis of the detection values by the sensor 210, whether an external stimulus such as "there is a loud sound", "spoken to", "petted", "picked up", "turned upside down", "became brighter", "became darker", or the like has occurred. Step S2 is an example of an external stimulus acquisition step.

When an external stimulus is acquired (step S2; YES), the controller 110 functions as the action controller 112 and causes the robot 200 to execute an action corresponding to the type of the acquired external stimulus (step S3). For example, when the type of the acquired external stimulus is "there is a loud sound", the controller 110 causes the robot 200 to execute an action of reacting to the loud sound. When the type of the acquired external stimulus is "turned upside down", the controller 110 causes the robot 200 to execute an action of reacting to being turned upside down. When the type of the acquired external stimulus is "spoken to", the controller 110 causes the robot 200 to execute an action of reacting to being spoken to. When the type of the acquired external stimulus is "petted", the controller 110 causes the robot 200 to execute an action of reacting to being petted.

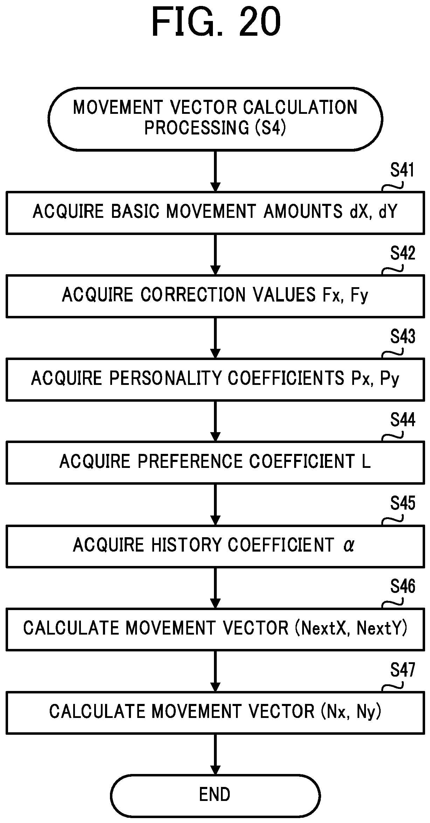

Next, the controller 110 functions as the parameter updater 113 and calculates the movement vector of the emotion parameter 121 (step S4). Details of movement vector calculation processing of step S4 are described while referencing FIG. 20.

When the movement vector calculation processing illustrated in FIG. 20 starts, firstly, the controller 110 acquires the basic movement amounts dX, dY of the emotion parameter 121 (step S41). The controller 110 references the event management table 123, and reads out the basic movement amounts dX, dY corresponding to the type of the external stimulus acquired in step S2.

Secondly, the controller 110 acquires the correction values Fx, Fy (step S42). The controller 110 references the event management table 123, and reads out the correction values Fx, Fy corresponding to the type of the external stimulus acquired in step S2. At this time, when the correction values Fx, Fy corresponding to the type of the acquired external stimulus are defined in the lookup table 124, the controller 110 references the lookup table 124 and reads out the correction values Fx, Fy corresponding to the current position of the emotion parameter 121 on the emotion map 300.

Thirdly, the controller 110 acquires the personality coefficients Px, Py (step S43). The controller 110 calculates, in accordance with Equation (2) above, the personality coefficients Px, Py from the four types of personality values set to the robot 200 and the basic movement amounts dX, dY.

Fourthly, the controller 110 acquires the preference coefficient L (step S44). The controller 110 references the event management table 123 and reads out the preference coefficient L corresponding to the type of the external stimulus acquired in step S2.

Fifthly, the controller 110 acquires the history coefficient $\alpha$ (step S45). The controller 110 references the history buffer 125 and calculates the past occurrence frequency of the external stimulus acquired in step S2. Then, the controller 110 sets, as the history coefficient $\alpha$, a value that increases as the calculated occurrence frequency decreases.

When the coefficients $\alpha$, L, Px, Py, Fx, Fy, dX, and dY are acquired as described above, the controller 110 calculates the movement vector (NextX, NextY) in accordance with Equation (1) above (step S46). Then, the controller 110 calculates, in accordance with Equation (4) above, the movement vector (Nx, Ny) that includes the fluctuation component (step S47). Thus, the movement vector calculation processing illustrated in FIG. 20 is ended.

Returning to FIG. 19, when the movement vector (Nx, Ny) of the emotion parameter 121 is calculated in step S4, the controller 110 functions as the parameter updater 113 and moves the emotion parameter 121 on the emotion map 300 (step S5). The controller 110 sets, as the new position of the emotion parameter 121, a position obtained by adding the calculated movement vector (Nx, Ny) to the current position of the emotion parameter 121. Step S5 is an example of a parameter updating step.

When the emotion parameter 121 is moved, the controller 110 functions as the action controller 112 and causes the robot 200 to execute an action corresponding to the moved emotion parameter 121 (step S6). For example, when the emotion parameter 121 expresses "joy", the controller 110 causes the robot 200 to execute an action that gives the impression of being joyous and, when the emotion parameter 121 expresses "sad", the controller 110 causes the robot 200 to execute an action that gives the impression of being sad. Step S6 is an example of an action control step.

When the robot 200 is caused to act, the controller 110 updates the history buffer 125 (step S7). The controller 110 associates the Event No. indicating the type of the external stimulus acquired in step S2 with the time at which that external stimulus is acquired, and stores the associated information in the history buffer 125.

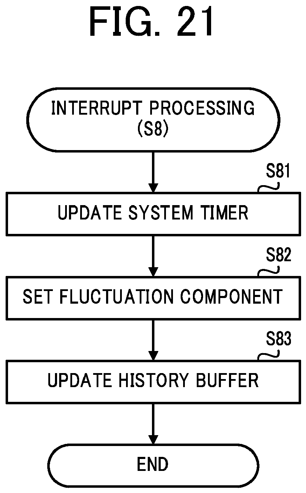

When the history buffer 125 is updated, the controller 110 executes interrupt processing as necessary (step S8). Specifically, the controller 110 executes interrupt processing every certain time interval (for example, every one minute period). Details of the interrupt processing of step S8 are described while referencing FIG. 21.

When the interrupt processing illustrated in FIG. 21 starts, the controller 110 updates the system timer to the current time (step S81). For example, when executing the interrupt processing on a one minute period, the controller 110 adds 60 seconds to a value expressing the current time of the system timer.

When the system timer is updated, the controller 110 sets the fluctuation component (step S82). The controller 110 uses Equation (5) above to set the length Len and the angle r using random numbers.

When the fluctuation component is set, the controller 110 updates the history buffer 125 (step S83). The controller 110 deletes, of the data stored in the history buffer 125, the data from more than one day before the current time. Thus, the interrupt processing illustrated in FIG. 21 is ended.

Returning to FIG. 19, when the interrupt processing is executed, the controller 110 returns to the processing of step S2, and determines, again, whether an external stimulus is acquired. When an external stimulus is acquired, the controller 110 executes the processing of steps S4 to S8 again.

Meanwhile, when an external stimulus is not acquired in step S2 (step S2; NO), the controller 110 functions as the action controller 112 and causes the robot 200 to execute a spontaneous action (step S9). Specifically, the controller 110 causes the robot 200 to execute an action that is not dependent on an external stimulus, such as an action imitating breathing, for example.

Next, the controller 110 functions as the parameter updater 113 and gradually moves the emotion parameter 121 on the emotion map 300 to the origin (step S10). As a result, the pseudo-emotion of the robot 200 gradually returns to the normal state during the period in which an external stimulus is not occurring.

Then, the controller 110 executes the interrupt processing as necessary in step S8, and returns to the processing of step S2. Thus, the controller 110 repeatedly executes the processing of steps S2 to S10 as long as the power of the robot 200 is turned ON and the robot 200 is capable of normal operation.

As described above, the robot 200 according to the present embodiment is a robot that acts in accordance with the emotion parameter 121 that expresses a pseudo-emotion and, when updating the emotion parameter 121, the position of the emotion parameter 121 on the emotion map 300 is moved on the basis of the basic movement amounts dX, dY that are evaluation values corresponding to the type of the external stimulus, and the correction values Fx, Fy corresponding to the current position of the emotion parameter 121 on the emotion map 300. Being based on the correction values Fx, Fy enables the expression of complex emotion changes that cannot be expressed by the basic movement amounts dX, dY alone, such as, for example, moving the position of the emotion parameter 121 on the emotion map 300 so as to pass through the origin. As a result, the robot 200 according to the present embodiment can simulate the natural changes of the emotions of a living organism, and can more realistically simulate a living organism.

Additionally, the robot 200 according to the present embodiment moves the position of the emotion parameter 121 on the emotion map 300 further on the basis of the personality coefficients Px, Py, the preference coefficient L, the history coefficient $\alpha$, and the fluctuation component. By being based on the personality coefficients Px, Py and the preference coefficient L, the manner of emotional changes can be varied in accordance with the personality or the likes and dislikes of the external stimuli. As such, individuality can be imparted to the robot 200. Additionally, by being based on the history coefficient $\alpha$, the manner of emotional changes can be varied in accordance with the magnitude of past occurrence frequencies. Furthermore, by being based on the fluctuation component, the emotion can be continuously changed, and fluctuations in emotions such as biorhythms can be expressed. Thus, by being further based on the personality coefficients Px, Py, the preference coefficient L, the history coefficient $\alpha$, and the fluctuation component, the robot 200 according to the present embodiment can more realistically simulate the natural changes of emotions of a living organism.

Modified Examples

Embodiments of the present disclosure are described above, but these embodiments are merely examples and do not limit the scope of application of the present disclosure. That is, various applications of the embodiments of the present disclosure are possible, and all embodiments are included in the scope of the present disclosure.

For example, in the embodiment described above, the parameter updater 113 calculates the movement vector (Nx, Ny) of the emotion parameter 121 on the basis of the basic movement amounts dX, dY and the correction values Fx, Fy and, furthermore, on the basis of the personality coefficients Px, Py, the preference coefficient L, the history coefficient $\alpha$, and the fluctuation component. However, a configuration is possible in which the parameter updater 113 calculates the movement vector (Nx, Ny) not on the basis of one or all of the personality coefficients Px, Py, the preference coefficient L, the history coefficient $\alpha$, and the fluctuation component. Due to being based on the personality coefficients Px, Py, the preference coefficient L, the history coefficient $\alpha$, and the fluctuation component, it is possible to more flexibly calculate the movement vector (Nx, Ny) but, due to not being based on one or all of these coefficients, it is possible to more simply calculate the movement vector (Nx, Ny).

In the embodiment described above, when the external stimulus of any of Event Nos. 3 to 6 is acquired, the correction values Fx, Fy are values that correct so as to move the position of the emotion parameter 121 on the emotion map 300 closer to the origin or the upper right position that are reference positions. However, a configuration is possible in which external stimuli for which the correction values Fx, Fy are defined as variable values corresponding to the current position of the emotion parameter 121 are not limited to the external stimuli of Event Nos. 3 to 6, and are any type of external stimuli.

The reference positions are not limited to the origin or the upper right position, and may be any position on the emotion map 300. For example, a configuration is possible in which the reference position changes in accordance with the personality coefficients Px, Py set to the robot 200. In such a configuration, the manner in which emotions change can be varied in accordance with personality differences and, as such, individuality can be imparted to the robot 200.

In the embodiment described above, as illustrated in FIGS. 14 and 15, the correction values Fx, Fy are defined so as to move the position of the emotion parameter 121 closer to the origin in the second and third quadrants, and closer to the upper right position in the first and fourth quadrants. However, the two-dimensional distribution of the correction values Fx, Fy is not limited thereto. Additionally, the correction values Fx, Fy are not limited to correcting so as to move the position of emotion parameter 121 closer to a specific reference position on the emotion map 300. In other words, the correction values Fx, Fy may be defined as desired as variable values that depend on the current position of the emotion parameter 121. Even when the direction of the correction values Fx, Fy is not set as a directly toward a specific reference position, defining the correction values Fx, Fy as variable values enables the expression of complex emotion changes that cannot be expressed by the basic movement amounts dX, dY alone.

In the embodiment described above, the emotion map 300 is expressed by a two-dimensional coordinate system. However, a configuration is possible in which the emotion map 300 is expressed by a coordinate system of one or more dimensions, and a value of the number of dimensions of the emotion map 300 is set as the emotion parameter 121. Additionally, the coordinate axes of the emotion map 300 are not limited to the pseudo degree of relaxation and degree of activeness, and may express degrees of other emotions.

In the embodiment described above, the exterior 201 is formed in a barrel shape from the head 204 to the torso 206, and the robot 200 has a shape as if lying on its belly. However, the robot 200 is not limited to resembling a living organism that has a shape as if lying on its belly. For example, a configuration is possible in which the robot 200 has a shape provided with arms and legs, and resembles a living organism that walks on four legs or two legs.

In the embodiment described above, the control device 100 is installed in the robot 200, but a configuration is possible in which the control device 100 is not installed in the robot 200 but, rather, is a separated device (for example, a server). When the control device 100 is provided outside the robot 200, the robot 200 and the control device 100 communicate and exchange data with each other via communicators. The external stimulus acquirer 111 acquires the external stimulus detected by the sensor 210, and the action controller 112 controls the driver 220 and the outputter 230 via communication with such a robot 200.

In the embodiment described above, in the controller 110, the CPU executes the program stored in the ROM to function as the various components, namely, the external stimulus acquirer 111, the action controller 112, and the parameter updater 113. However, in the present disclosure, the controller 110 may include, for example, dedicated hardware such as an Application Specific Integrated Circuit (ASIC), a Field-Programmable Gate Array (FPGA), various control circuitry, or the like instead of the CPU, and this dedicated hardware may function as the various components, namely the external stimulus acquirer 111, the action controller 112, and the parameter updater 113. In this case, the functions of each of the components may be realized by individual pieces of hardware, or the functions of each of the components may be collectively realized by a single piece of hardware. Additionally, the functions of each of the components may be realized in part by dedicated hardware and in part by software or firmware.

It is possible to provide a robot provided in advance with the configurations for realizing the functions according to the present disclosure, but it is also possible to apply a program to cause an existing information processing device or the like to function as the robot according to the present disclosure. That is, a configuration is possible in which a CPU or the like that controls an existing information processing apparatus or the like is used to execute a program for realizing the various functional components of the robot 200 described in the foregoing embodiments, thereby causing the existing information processing device to function as the robot according to the present disclosure.

Any method may be used to apply the program. For example, the program can be applied by storing the program on a non-transitory computer-readable recording medium such as a flexible disc, a compact disc (CD) ROM, a digital versatile disc (DVD) ROM, and a memory card. Furthermore, the program can be superimposed on a carrier wave and applied via a communication medium such as the internet. For example, the program may be posted to and distributed via a bulletin board system (BBS) on a communication network. Moreover, a configuration is possible in which the processing described above is executed by starting the program and, under the control of the operating system (OS), executing the program in the same manner as other applications/programs.

The foregoing describes some example embodiments for explanatory purposes. Although the foregoing discussion has presented specific embodiments, persons skilled in the art will recognize that changes may be made in form and detail without departing from the broader spirit and scope of the invention. Accordingly, the specification and drawings are to be regarded in an illustrative rather than a restrictive sense. This detailed description, therefore, is not to be taken in a limiting sense, and the scope of the invention is defined only by the included claims, along with the full range of equivalents to which such claims are entitled.

**Claims**

1. A robot (200), comprising:

   external stimulus acquisition means (111) for acquiring an external stimulus;
   parameter updating means (113) for updating, in accordance with a type of the external stimulus acquired by the external stimulus acquisition means (111), an emotion parameter expressed by a position on a positioning map (300) having at least two coordinate axes and expressing a pseudo-emotion; and
   action control means (112) for executing action control corresponding to the emotion parameter updated by the parameter updating means (113),
   **characterized in that**
   the robot (200) comprises a memory storing a first table in which an evaluation value is associated with each type of the external stimulus and a second table in which a correction value is associated with each position on the positioning map (300), and
   in a case of updating the emotion parameter, the parameter updating means (113) acquires, from the first table, the evaluation value corresponding to the type of the external stimulus acquired by the external stimulus acquisition means (111) and acquires, from the second table, the correction value corresponding a current position of the emotion parameter on the positioning map (300), and moves, based on the acquired evaluation value and the acquired correction value, a position of the emotion parameter on the positioning map (300).

2. The robot (200) according to claim 1, wherein, in a case where the current position of the emotion parameter is positioned within a predetermined quadrant, the correction value in the second table is set so as to move the position of the emotion parameter closer to a reference position on the positioning map (300).

3. The robot (200) according to claim 2, wherein, in a case where the parameter updating means (113) moves the position of the emotion parameter on the positioning map (300) across a plurality of different quadrants, the correction value in the second table is set such that the position of the emotion parameter moves from the current position toward the reference position and then toward a target position.

4. The robot (200) according to claim 2, wherein the parameter updating means (113) moves the position of the emotion parameter on the positioning map (300) closer to the reference position as time passes until next acquisition of the external stimulus by the external stimulus acquisition means (111) after the parameter updating means (113) updates the emotion data in accordance with the type of the external stimulus.

5. The robot (200) according to claim 2, wherein the reference position is an origin of the positioning map (300).

6. The robot (200) according to any one of claims 1 to 5, wherein the positioning map (300) includes, as the at least two coordinate axes, a first coordinate axis for expressing a pseudo degree of relaxation, and a second coordinate axis for expressing a pseudo degree of activeness.

7. The robot (200) according to any one of claims 1 to 5, wherein, in a case of updating the emotion parameter, the parameter updating means (113) move, based further on a fluctuation component using a random number, the position of the emotion parameter on the positioning map (300).

8. The robot (200) according to claim 7, wherein

the fluctuation component is expressed by a polar coordinate,
a radius component of the fluctuation component is set using a random number, and
an angle component of the fluctuation component is set so as to go around once in a predetermined period.

9. The robot (200) according to any one of claims 1 to 5, wherein, in a case of updating the emotion parameter, the parameter updating means (113) moves, based further on a personality coefficient expressing a pseudo-personality of the robot (200), the position of the emotion parameter on the positioning map (300).

10. The robot (200) according to any one of claims 1 to 5, wherein, in a case of updating the emotion parameter, the parameter updating means (113) moves, based further on a preference coefficient expressing a pseudo-preference of the robot (200) for the type of the external stimulus acquired by the external stimulus acquisition means (111), the position of the emotion parameter on the positioning map (300).

11. The robot (200) according to any one of claims 1 to 5, wherein, in a case of updating the emotion parameter, the parameter updating means (113) moves, based further on a past occurrence frequency of the type of the external stimulus acquired by the external stimulus acquisition means (111), the position of the emotion parameter on the positioning map (300).

12. The robot (200) according to claim 11, wherein, in a case of updating the emotion parameter, the parameter updating means (113) moves the position of the emotion parameter on the positioning map (300) greater as the occurrence frequency decreases.

13. A robot control method, comprising:

an external stimulus acquisition step of acquiring an external stimulus;
a parameter updating step of updating an emotion parameter in accordance with a type of the external stimulus acquired in the external stimulus acquisition step, the emotion parameter being expressed by a position on a positioning map (300) having at least two coordinate axes; and
an action control step of executing action control corresponding to the emotion parameter updated in the parameter updating step,
**characterized in that**
a first table in which an evaluation value is associated with each type of the external stimulus and a second table in which a correction value is associated with each position on the positioning map (300) are stored in a memory, and

the parameter updating step includes, in a case of updating the emotion parameter, acquiring, from the first table, the evaluation value corresponding to the type of the external stimulus acquired in the external stimulus acquisition step and acquiring, from the second table, the correction value corresponding to a current position of the emotion parameter on the positioning map (300), and moving, based on the acquired evaluation value and the acquired correction value, a position of the emotion parameter on the positioning map (300).

14. A program that causes a computer of a robot (200) that acts in accordance with an emotion parameter expressing a pseudo-emotion to function as:

external stimulus acquisition means (111) for acquiring an external stimulus;

parameter updating means (113) for updating the emotion parameter in accordance with a type of the external stimulus acquired by the external stimulus acquisition means (111), the emotion parameter being expressed by a position on a positioning map (300) having at least two coordinate axes; and

action control means (112) for executing action control corresponding to the emotion parameter updated by the parameter updating means (113);

**characterized in that**

a first table in which an evaluation value is associated with each type of the external stimulus and a second table in which a correction value is associated with each position on the positioning map (300) are stored in a memory, and

in a case of updating the emotion parameter, the parameter updating means (113) acquire, from the first table, the evaluation value corresponding to the type of the external stimulus acquired by the external stimulus acquisition means (111) and acquires, from the second table, the correction value corresponding a current position of the emotion parameter on the positioning map (300), and move, based on the acquired evaluation value and the acquired correction value, a position of the emotion parameter on the positioning map (300).

# FIG. 1

# FIG. 2

# FIG. 3

# FIG. 4

0

207

206

221

−100

204

RIGHT ⟷ LEFT

+Z
+X ← ⊙
+Y

# FIG. 5

0

207

206

221

204

+100

RIGHT ⟷ LEFT

+Z
+X ← ⊙
+Y

# FIG. 6

+100

FRONT ←——→ BACK

207

0

222

204

221

205

206

+Z
+Y ← ⊗
+X

−100

# FIG. 7

+100

FRONT ←——→ BACK

207

222

0

221

205

204

206

+Z
+Y ← ⊗
+X

−100

# FIG. 8

# FIG. 9

# FIG. 10

BASIC MOVEMENT AMOUNT WHEN
"THERE IS A LOUD SOUND"

300

(−200,200)  (200,200)

Y

(0,0)  X

(−200,−200)  (200,−200)

# FIG. 11

BASIC MOVEMENT AMOUNT WHEN
"SPOKEN TO"

300

(−200,200)  (200,200)

Y

(0,0)  X

(−200,−200)  (200,−200)

# FIG. 12

EVENT MANAGEMENT TABLE 123

| EVENT NO. | CONTENT | BASIC MOVEMENT AMOUNT | | CORRECTION VALUE | | PREFERENCE COEFFICIENT L |
|---|---|---|---|---|---|---|
| | | dx | dy | Fx | Fy | |
| 1 | THERE IS A LOUD SOUND | 20 | 20,0,−20 | −2 | 0 | 0.8 |
| 2 | SPOKEN TO | 20 | 20 | 2 | 2 | 2.0 |
| 3 | HORIZONTAL, BODY IS PETTED | 20 | 20,0,−20 | TABLE 1 | | 3.0 |
| 4 | HORIZONTAL, HEAD IS PETTED | 20 | 20,0,−20 | TABLE 2 | | 1.0 |
| 5 | HELD, BODY IS PETTED | 20 | 20,0,−20 | TABLE 3 | | 1.0 |
| 6 | HELD, HEAD IS PETTED | 20 | 20,0,−20 | TABLE 4 | | 1.5 |
| 7 | TURNED UPSIDE DOWN | 20 | 20,0,−20 | 1 | 1 | 0.7 |
| 8 | HEAD LOWERED | 0 | 20 | 1 | −1 | 0.9 |
| 9 | BECAME DARKER | 0 | 0 | 1 | 1 | 1.0 |
| 10 | BECAME BRIGHTER | 0 | 0 | 1 | 1 | 1.0 |
| 11 | PICKED UP | 0 | 20 | 1 | 1 | 1.0 |
| 12 | WHIMSICAL ACTION (TIMER STARTUP) | 0 | 0 | 1 | 1 | 1.0 |

# FIG. 13

CORRECTION VALUE WHEN
"THERE IS A LOUD SOUND"

# FIG. 14

CORRECTION VALUE WHEN
"HORIZONTAL, BODY IS PETTED"

# FIG. 15

LOOKUP TABLE 124

| TABLE 1 | | | | TABLE 2 | | | | · · · |
|---|---|---|---|---|---|---|---|---|
| INPUT | | OUTPUT | | INPUT | | OUTPUT | | · · · |
| x | y | Fx | Fy | x | y | Fx | Fy | |
| −200 | −200 | 1.0 | 1.0 | −200 | −200 | 0.9 | 0.9 | |
| ⋮ | ⋮ | ⋮ | ⋮ | ⋮ | ⋮ | ⋮ | ⋮ | |
| −200 | 200 | 1.0 | −1.0 | 0 | 0 | 0.9 | −0.9 | |
| ⋮ | ⋮ | ⋮ | ⋮ | ⋮ | ⋮ | ⋮ | ⋮ | ⋮ |
| 0 | 0 | 1.0 | 1.0 | 0 | 0 | 0.9 | 0.9 | |
| ⋮ | ⋮ | ⋮ | ⋮ | ⋮ | ⋮ | ⋮ | ⋮ | |
| 200 | −200 | 0.0 | 1.0 | 200 | −200 | 0.0 | 0.9 | |
| ⋮ | ⋮ | ⋮ | ⋮ | ⋮ | ⋮ | ⋮ | ⋮ | |
| 200 | 200 | 0.0 | 0.0 | 200 | 200 | 0.0 | 0.0 | |

# FIG. 16

DEGREE OF ACTIVENESS

Y

(−200,200)                    200                    (200,200)

| UPSET | DISGUSTED | EXCITED | THRILLED | JOY |

300

100

| ANXIOUS | | FIDGETY | | GIDDY |

| WORRIED | NERVOUS | NORMAL | COMFORTABLE | RELAXED |

−200                    −100        (0,0)        100        200        X

DEGREE OF RELAXATION

| FRIGHTENED | | CHILL | | SATISFIED |

−100

| SAD | MELANCHOLY | DISINTERESTED | CALM | PEACEFUL |

(−200,−200)                    −200                    (200,−200)

# FIG. 17

HISTORY BUFFER 125

| NO. | EVENT NO. | OCCURRENCE TIME |
|-----|-----------|-----------------|
| 1 | 4 | 60 |
| 2 | 11 | 155 |
| 3 | 7 | 176 |
| 4 | 2 | 233 |
| ⋮ | ⋮ | ⋮ |
| N−1 | NONE | EMPTY |

# FIG. 18

FLUCTUATION COMPONENT

$$X = L*\cos(r)$$
$$Y = L*\sin(r)$$

300

# FIG. 19

```
          ROBOT CONTROL
           PROCESSING
                │
                │              S1
                ▼
        INITIALIZATION PROCESSING
                │
                │              S2
                ▼
     ◁ ACQUIRE EXTERNAL STIMULUS ? ▷────────────┐
                │                    NO          │
            YES │              S3                │
                ▼                                │
        ACTION CORRESPONDING TO                  │
           EXTERNAL STIMULUS                     │
                │                                │         S9
                │              S4                ▼
                ▼                        SPONTANEOUS ACTION
       MOVEMENT VECTOR CALCULATION               │
              PROCESSING                         │         S10
                │                                ▼
                │              S5        MOVE EMOTION PARAMETER
                ▼                       GRADUALLY TOWARD ORIGIN
        MOVE EMOTION PARAMETER                   │
                │                                │
                │              S6                │
                ▼                                │
        ACTION CORRESPONDING TO                  │
           EMOTION PARAMETER                     │
                │                                │
                │              S7                │
                ▼                                │
         UPDATE HISTORY BUFFER                   │
                │◄───────────────────────────────┘
                │              S8
                ▼
          INTERRUPT PROCESSING
                │
                └──────────┘
```

# FIG. 20

```
┌─────────────────────────────────────┐
│   MOVEMENT VECTOR CALCULATION        │
│       PROCESSING (S4)                │
└─────────────────────────────────────┘
                  │
                  ▼                      S41
┌─────────────────────────────────────┐
│  ACQUIRE BASIC MOVEMENT AMOUNTS dX, dY │
└─────────────────────────────────────┘
                  │
                  ▼                      S42
┌─────────────────────────────────────┐
│     ACQUIRE CORRECTION VALUES Fx, Fy  │
└─────────────────────────────────────┘
                  │
                  ▼                      S43
┌─────────────────────────────────────┐
│  ACQUIRE PERSONALITY COEFFICIENTS Px, Py │
└─────────────────────────────────────┘
                  │
                  ▼                      S44
┌─────────────────────────────────────┐
│    ACQUIRE PREFERENCE COEFFICIENT L   │
└─────────────────────────────────────┘
                  │
                  ▼                      S45
┌─────────────────────────────────────┐
│     ACQUIRE HISTORY COEFFICIENT α     │
└─────────────────────────────────────┘
                  │
                  ▼                      S46
┌─────────────────────────────────────┐
│  CALCULATE MOVEMENT VECTOR (NextX, NextY) │
└─────────────────────────────────────┘
                  │
                  ▼                      S47
┌─────────────────────────────────────┐
│   CALCULATE MOVEMENT VECTOR (Nx, Ny)  │
└─────────────────────────────────────┘
                  │
                  ▼
             ┌─────────┐
             │   END   │
             └─────────┘
```

# FIG. 21

INTERRUPT PROCESSING
(S8)

UPDATE SYSTEM TIMER  S81

SET FLUCTUATION COMPONENT  S82

UPDATE HISTORY BUFFER  S83

END

Europäisches
Patentamt

European
Patent Office

Office européen
des brevets

# EUROPEAN SEARCH REPORT

**Application Number**

EP 24 15 3173

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/299999 A1 (HASEGAWA HIROKAZU [JP] ET AL) 22 September 2022 (2022-09-22) * paragraphs [0038] - [0050], [0066] - [0072], [0094] - [0096], [0109]; figures 1,2,8,10,12,15,17 * | 1-14 | INV. G06N3/008 B25J11/00 |
| A | US 2019/030723 A1 (HAYASHI KANAME [JP]) 31 January 2019 (2019-01-31) * paragraphs [0050] - [0054], [0213] - [0214]; figures 4,5 * | 1-14 | |

**TECHNICAL FIELDS SEARCHED (IPC)**

G06N
B25J

The present search report has been drawn up for all claims

| Place of search | Date of completion of the search | Examiner |
|---|---|---|
| The Hague | 31 May 2024 | Manfrin, Max |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
........................................................................................
& : member of the same patent family, corresponding
document

EPO FORM 1503 03.82 (P04C01)

**ANNEX TO THE EUROPEAN SEARCH REPORT
ON EUROPEAN PATENT APPLICATION NO.**                    EP 24 15 3173

This annex lists the patent family members relating to the patent documents cited in the above-mentioned European search report.
The members are as contained in the European Patent Office EDP file on
The European Patent Office is in no way liable for these particulars which are merely given for the purpose of information.

31-05-2024

| Patent document cited in search report | | Publication date | Patent family member(s) | | Publication date |
|---|---|---|---|---|---|
| US 2022299999 | A1 | 22-09-2022 | JP | 7192905 B2 | 20-12-2022 |
| | | | JP | 7364016 B2 | 18-10-2023 |
| | | | JP | 2022142107 A | 30-09-2022 |
| | | | JP | 2023024848 A | 17-02-2023 |
| | | | US | 2022299999 A1 | 22-09-2022 |
| US 2019030723 | A1 | 31-01-2019 | CN | 109070330 A | 21-12-2018 |
| | | | DE | 112017001874 T5 | 27-12-2018 |
| | | | GB | 2563786 A | 26-12-2018 |
| | | | JP | 6402320 B2 | 10-10-2018 |
| | | | JP | 2019005591 A | 17-01-2019 |
| | | | JP | WO2017175559 A1 | 12-04-2018 |
| | | | US | 2019030723 A1 | 31-01-2019 |
| | | | WO | 2017175559 A1 | 12-10-2017 |

EPO FORM P0459

For more details about this annex : see Official Journal of the European Patent Office, No. 12/82

**EP 4 407 513 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003117866 A